# FASCICULE DE BREVET EUROPEEN

(11) **EP 1 093 545 B1**
(45) Date de publication et mention de la délivrance du brevet: **25.02.2004**
(21) Numéro de dépôt: 99929411.9
(22) Date de dépôt: 06.07.1999
(51) Int. Cl.: F15B 15/20, F15B 15/26

(54) **VERIN A PRECOURSE D'APPROCHE ET COURSE DE TRAVAIL, POUR LA MANOEUVRE D'UN OUTIL**
BETÄTIGUNGSGLIED EINES WERKZEUGS MIT EILGANG UND ARBEITSGANG
ACTUATOR WITH APPROACH PRE-STROKE AND WORKING STROKE FOR OPERATING A TOOL

(30) Priorité: 08.07.1998 FR 9808752
(43) Date de publication de la demande: 25.04.2001
(73) Titulaire: ARO, F-72500 Château-du-Loir (FR)
(72) Inventeur: BOYER, Jean, Noel, F-37390 Mettray (FR); TIBERGHIEN, Olivier, F-37360 Semblançay (FR); CHEVASSU, Daniel, F-72500 Château-du-Loir (FR)
(74) Mandataire: Bérogin, Francis
(86) Numéro de dépôt international: PCT/FR1999/001626
(87) Numéro de publication internationale: WO 2000/003145

(56) Documents cités:
- DE-A- 2 920 463
- FR-A- 1 458 593
- FR-A- 2 029 119
- FR-A- 2 111 869
- GB-A- 2 292 588
- US-A- 2 568 228
- US-A- 3 576 151
- US-A- 3 677 005

## Description

La présente invention concerne un vérin à précourse d'approche et course de travail, pour la manoeuvre d'un outil, comportant un corps de vérin dans lequel peuvent coulisser au moins deux pistons, soit dans le même sens, soit dans deux sens opposés lorsqu'ils sont extraits du corps du vérin, à savoir un piston de précourse et au moins un piston de travail solidaire d'une tige de travail actionnant l'outil.

L'outil sera destiné par exemple à réaliser des opérations d'assemblage par soudage, emboutissage, agrafage ou autre lorsque l'outil ou, inversement, la pièce est transportée par un robot ou un manipulateur pour exécuter les différents points d'assemblage que comporte la gamme de soudage. Si le robot ou le manipulateur transporte la pièce à assembler, l'outil est fixé au sol. Si le robot ou le manipulateur transporte l'outil d'assemblage, la ou les pièces à assembler sont fixées par rapport au sol. L'invention s'applique lorsque l'outil est muni d'un système de fermeture permettant d'enserrer les pièces à assembler entre deux bras ou deux mâchoires articulées, le serrage (course de travail) s'effectuant après une précourse d'approche de l'outil.

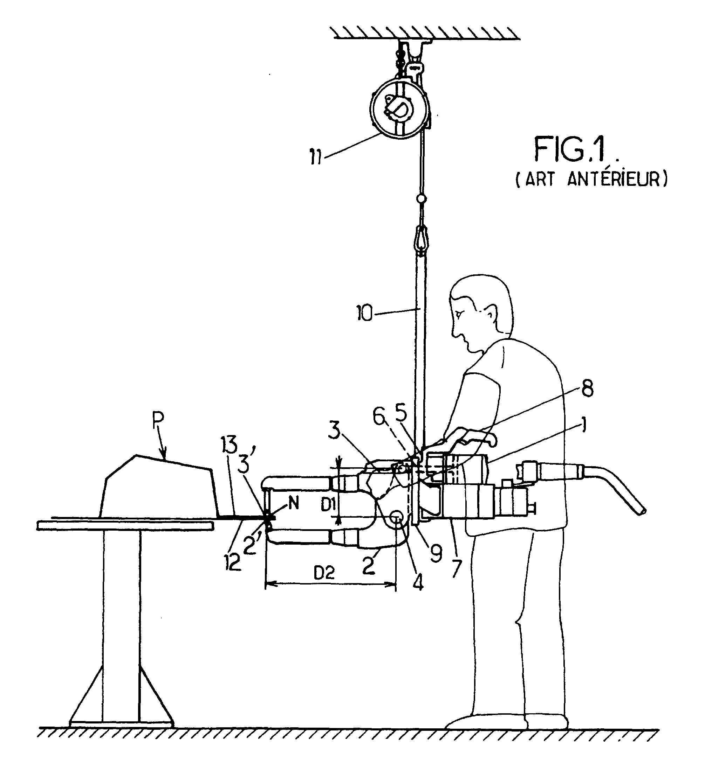

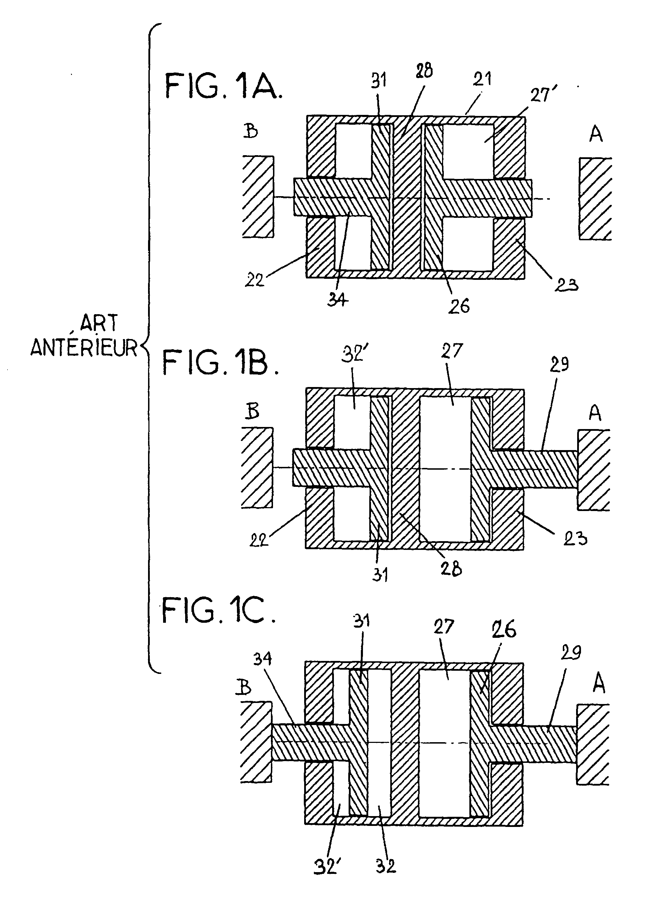

Un vérin pneumatique (ou hydraulique) connu du type mentionné au début, destiné par exemple aux applications précitées, peut être utilisé dans le cadre de la technique décrite ci-après avec référence à la figure 1 du dessin ci-annexé.

Cette figure représente de profil un poste de soudage auquel un opérateur exécute des points de soudage à l'aide d'une pince de soudage dite en X.

La pince représentée à la figure 1 comporte des bras porte-électrode supérieur 3 et inférieur 2. Les deux bras sont articulés l'un sur l'autre autour de l'axe d'articulation 4. Un vérin par exemple pneumatique 1 est rattaché d'une part au bras 2 par sa tige 6, d'autre part au bras 3 par le corps de pince 5. Eventuellement, la pince à souder peut être équipée d'un transformateur de soudage 7.

Dans l'exemple de poste à souder manuel décrit ici, la pince est suspendue à un équilibreur 11 par l'intermédiaire d'un cercle de giro 9 et d'une hampe 10 permettant ainsi une manipulation aisée de l'outil sans contrainte de poids pour l'opérateur. La pièce P sur laquelle sont effectués les points de soudure est supposée fixe par rapport au sol.

L'ensemble vérin et articulation permet de fermer la pince, c'est-à-dire d'enserrer les tôles 12 et 13 entre les électrodes 2' et 3' afin de les rapprocher. Lorsqu'un effort suffisant est obtenu, on fait passer un courant à travers la pièce, de nature à provoquer la formation d'un noyau fondu entre les pièces 12 et 13. Après refroidissement, ce noyau devient un point d'assemblage N.

Lorsque le cycle de soudage est terminé, on commande le vérin 1 pour ouvrir les bras 2 et 3 et permettre le déplacement de l'outil jusqu'au point suivant de la gamme de soudage N + 1.

Si l'on utilise une pince en C au lieu d'une pince en X, le fonctionnement est globalement le même, l'effort de poussée du vérin 1 étant directement transmis aux électrodes 2' et 3'.

Les contraintes pratiques de cette technique sont les suivantes :
lorsque l'opérateur a amené les électrodes 2' et 3' au-dessus du point suivant de la gamme de soudage, il peut commencer un nouveau cycle de soudage. L'effort de poussée au vérin 1 est directement proportionnel à la surface sur laquelle s'applique cette pression et à la pression d'air dans les différentes chambres du vérin de soudage. Aussi, pour une longueur de bras 2 et 3 donnée D2, plusieurs solutions peuvent être envisagées afin d'obtenir des efforts suffisants sur les tôles :
   - en utilisant une pression d'air plus élevée dans le vérin de soudage 1 ;
   - en augmentant le diamètre du piston sur lequel va s'appliquer la pression pneumatique de soudage ;
   - en multipliant le nombre de pistons par lesquels sera transmis l'effort, ces vérins étant alors dits "vérins multiétages" ; ou
   - en augmentant la distance du bras de levier D1 dans le cas d'une pince dite "ciseaux".

Dans la pratique, la pression maximale disponible reste limitée et est le plus souvent comprise entre 5 et 10 bars dans le cas d'un poste à souder manuel. De plus, dans le cas d'une pince à souder à robot ou manuelle, les contraintes de poids, d'inertie, d'encombrement, d'ergonomie et de visibilité du point de soudure nécessitent de réduire au maximum les dimensions de chacun des éléments de la pince. Il est notamment impossible d'augmenter démesurément le diamètre du vérin de soudage, sa longueur en multipliant les étages amplificateurs ou encore, dans le cas d'une pince "ciseaux", son bras de levier Dl.

La difficulté technologique consiste donc à pouvoir, sur un vérin de soudage, multiplier le nombre d'étages tout en conservant la fonction double et sans augmenter démesurément la longueur du vérin.

Enfin, les contraintes liées à la gamme de soudage nécessitent de travailler avec un vérin dit "double course" autorisant une grande course (précourse d'approche) lors notamment de l'engagement et du retrait des bras 2 et 3 de l'outillage, et une petite course dite "course de travail" durant le cycle de soudage pour des raisons de gain de temps ou d'obstacle "plafond" empêchant une réouverture complète de la pince à grande ouverture.

Dans la pratique, le rapport entre la petite et la grande course est le plus souvent compris entre 2 et 5.

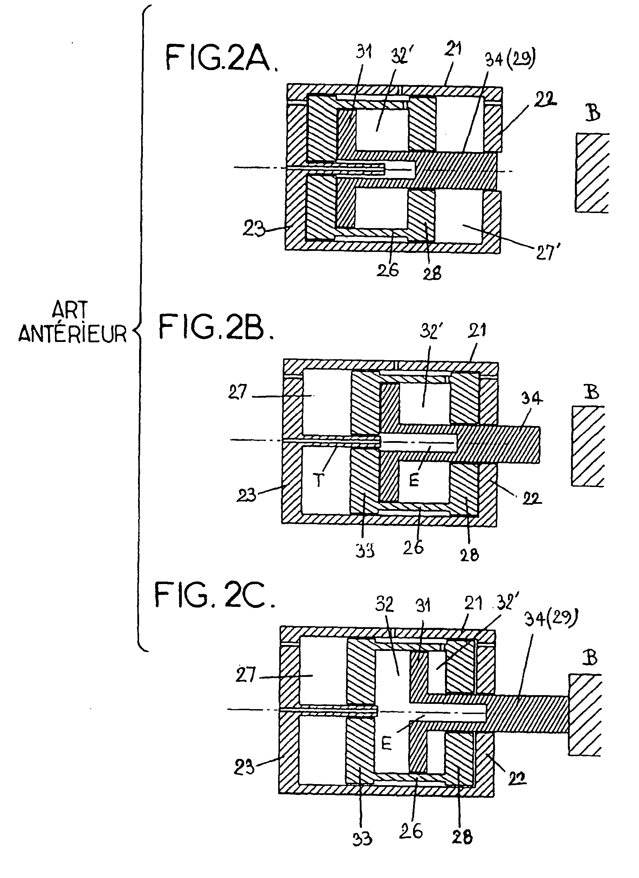

Cette nécessité d'une précourse d'approche et d'une course de travail dans un même vérin pose les problèmes suivants, explicités avec référence aux figures 1A, 1B et 1C pour le cas de deux pistons (de précourse d'approche et de travail) se déplaçant dans deux sens opposés, et avec référence aux figures 2A, 2B et 2C pour le cas de deux pistons (de précourse d'approche et de travail) se déplaçant dans le même sens.

Dans les figures 1A à 1C on a référencé le corps de vérin (par exemple pneumatique) en 21, le piston et la tige de précourse respectivement en 26 et 29, les chambres de pression et d'échappement de précourse respectivement en 27 et 27', le piston et la tige de travail respectivement en 31 et 34, et les chambres de pression et d'échappement de travail respectivement en 32 et 32'. La référence 28 désigne une culasse intermédiaire, et les références 22 et 23 désignent respectivement des culasses avant et arrière, de fermeture du corps de vérin 21. On a supposé ici que l'outil était une pince comportant deux bras, par exemple articulés en X, l'un, commandé par la tige de précourse 29, effectuant toute la précourse d'approche de la pièce concernée entre la position de pleine ouverture de la figure 1A et la position de petite ouverture de la figure 1B, tandis que l'autre bras, commandé par la tige de travail 34, effectue seulement la course de travail (serrage de la pièce) entre la position de petite ouverture de la figure 1B et la position de fermeture de la pince de la figure 1C (les appuis A et B schématisent l'arrivée des deux tiges de piston dans leurs positions de butée respectives - les orifices d'arrivée et de sortie de fluide dans les différentes chambres ne sont pas représentés).

Une telle conception de vérin à double course a pour inconvénient de limiter l'effort de soudage à la plus faible des poussées exercées sur la tige de précourse et sur la tige de travail. En effet, un déséquilibre entre ces deux forces entraîne un déplacement des pistons 26 et 31 jusqu'à entrer en contact avec l'une des culasses du vérin.

Il est notamment impossible avec une telle conception d'augmenter l'effort de soudage sans augmenter l'effort de précourse.

Dans l'art antérieur illustré par les figures 2A à 2C on a utilisé les mêmes références que dans les figures 1A à 1C pour désigner les mêmes organes ou des organes jouant le même rôle. Le piston de précourse d'approche est cependant dépourvu de tige et se présente sous la forme d'un cylindre 26 monté coulissant dans le corps de vérin 21 et dans lequel peut coulisser le piston de travail 31, dont la tige de travail 34 traverse la culasse 28 ainsi que la culasse avant 22 du corps 21. Dans ce mode de réalisation, en outre, la tige 34 du piston de travail comporte un évidement axial E débouchant dans la chambre de pression de travail 32, et pouvant recevoir un tube T d'alimentation en fluide sous pression, traversant la culasse arrière 23 du corps de vérin 21 ainsi que l'autre culasse 33 du piston de précourse 26.

Brièvement, le fonctionnement de ce dispositif est le suivant, en supposant encore qu'il commande la fermeture d'une pince, par exemple une pince de soudage : à partir de la position de grande ouverture de la figure 2A, l'amenée du fluide sous pression dans la chambre de pression de précourse 27 pousse le piston de précourse 26 et le piston de travail 31 qu'il contient vers la droite, jusqu'à la position de petite ouverture de la figure 2B ; la tige de travail 34 (qui sert en même temps de tige de précourse 29) n'est alors que partiellement extraite. A partir de cette position, l'amenée du fluide sous pression dans le tube T provoque le déplacement du piston de travail 31 vers la droite à l'intérieur de la chambre 32-32' du piston de précourse 26, ce qui amène l'outil à la position de pleine fermeture de la pince, c'est-à-dire sa position de serrage de la pièce (figure 2C).

Une telle conception de vérin à double course ne permet encore pas d'utiliser une construction multiétagée du vérin, pour augmenter l'effort de travail. De plus, de la même façon que dans l'exemple précédent, il est indispensable que l'effort permettant de retenir le module travail soit supérieur ou égal à celui exercé sur la tige de travail pour engendrer l'effort de soudage. En effet, un déséquilibre entre ces forces entraînerait un recul du module travail jusqu'à l'entrée en contact du piston travail 31 avec la culasse 28. Il est donc impossible avec une telle conception d'augmenter l'effort de soudage sans augmenter l'effort de précourse.

Les vérins à double course (précourse d'approche et course de travail) du type précité présentent d'autres inconvénients lorsque l'on souhaite mettre en oeuvre un vérin multiétages, c'est-à-dire un vérin (ce sera surtout le cas pour les vérins pneumatiques) dont le piston de travail est attelé à un ou plusieurs étages d'amplification.

Cette technique de réalisation de vérin multiétage a l'inconvénient, pour un diamètre et une pression donnés, d'augmenter la longueur du vérin au minimum de sa course totale (course de travail et précourse) à chaque étage d'amplification ajouté. Le volume des chambres augmentant, les temps de déplacement et de mise en effort du vérin croissent de la même façon. En pratique, les contraintes d'encombrement, d'équilibre, de poids, d'inertie, d'ergonomie, de visibilité du point de soudure et de rapidité du vérin limitent les cas d'emploi de ce type de vérin à un seul étage multiplicateur.

Par DE 2 920 463 A, on connait un vérin à précourse d'approche et course de travail, pour la manoeuvre d'un outil, comportant un corps de vérin dans lequel peuvent coulisser au moins deux pistons, soit dans le même sens, soit dans deux sens opposés lorsqu'ils sont extraits du corps du vérin, à savoir un piston de précourse et au moins un piston de travail solidaire d'une tige de travail actionnant l'outil, ainsi que des moyens de verrouillage, au moins dans le sens du retrait, entre ledit piston de précourse et ledit corps de vérin, l'actionnement de ces moyens de verrouillage pouvant être commandé extérieurement ou automatiquement à la fin du mouvement de précourse ou au début du mouvement de travail.

Le piston de précourse pouvant ainsi être bloqué par rapport au corps du vérin, on pourra augmenter autant que souhaitable la pression sur le piston de travail sans risquer un déséquilibre, et la pression d'approche pourra ainsi rester relativement faible. On pourra aussi multiplier le nombre d'étages amplificateurs sans augmenter à chaque fois la longueur du vérin de la longueur de la course d'approche.

On peut aussi, et comme on le verra mieux par la suite, ajouter une fonction "double course" sur un vérin multiétages monocourse grâce au système d'accrochage autonome que constituent les moyens de verrouillage.

Selon DE 2 920 463 A également, lesdits moyens de verrouillage agissent entre ledit corps de vérin et une tige de précourse solidaire dudit piston de précourse.

Le but de l'invention est de gérer deux ouvertures lors du soudage, tout en démultipliant l'effort lors de la phase de serrage et en conservant une longueur et un diamètre de vérin minima.

A cet effet, le vérin selon l'invention se caractérise en ce que ladite tige de travail et ladite tige de précourse se déplacent dans le même sens entre leur position rentrée dans ledit corps de vérin et leur position extraite, et la tige de travail est montée coulissante dans un logement axial de la tige de précourse.

Quant aux moyens de verrouillage, ils pourront être très divers. Selon un mode de réalisation, les moyens de verrouillage comportent au moins un verrou propre à coulisser transversalement dans une culasse avant dudit corps de vérin, ce verrou étant établi sous la forme d'un petit piston et pouvant être sollicité, par une pression extérieure, à se verrouiller dans un logement de ladite tige de précourse, en comprimant un ressort de rappel en position de déverrouillage. Il s'agit donc là de moyens de verrouillage commandés extérieurement.

Selon un autre mode de réalisation, notamment (mais non exclusivement) dans le cas où le piston de précourse et le piston de travail se déplacent en sens opposés lorsqu'ils sont extraits du corps du vérin, le vérin peut être caractérisé en ce que lesdits moyens de verrouillage comprennent, dans une culasse arrière du corps dudit vérin, une couronne coaxiale à ladite tige de précourse et propre à être rappelée en position de déverrouillage par des ressorts à action périphérique, la rotation de cette couronne à l'encontre de cette force de rappel pouvant être provoquée par apport d'énergie extérieure ou automatiquement par l'arrivée dudit piston de précourse à la fin de sa course d'approche et sollicitant alors un ou des verrous à être bloqués dans des logements de ladite tige de précourse. Il s'agit donc là, en principe, de moyens de verrouillage à commande automatique, mais il est également possible d'envisager la mise en rotation de la couronne par un apport d'énergie extérieure.

Dans le cas d'une commande automatique, on peut encore prévoir que sur sa face tournée vers ladite culasse arrière, ledit piston de précourse comporte des pointes coniques propres à s'engager dans des alésages respectifs de ladite couronne et à faire pivoter cette dernière jusqu'à sa position de verrouillage, ces pointes étant légèrement décalées par rapport auxdits alésages lorsque ladite couronne est au repos, en position de déverrouillage.

Selon encore un autre mode de réalisation à actionnement automatique mais dans lequel les moyens de verrouillage pourraient aussi être commandés de l'extérieur par une source d'énergie, le vérin peut encore être caractérisé en ce qu'il comporte un ou des loquets rappelés par des ressorts dans un sens tendant à les amener en saillie sur la surface latérale dudit piston de précourse et à permettre leur engagement dans des encoches du corps de vérin, assurant ainsi le blocage dudit piston de précourse par rapport à ce corps, au moins dans le sens de son retrait, ledit piston de travail comportant des rampes propres à agir, lors de son retour en position complètement rétractée, sur les queues desdits loquets, de sorte à les ramener en position rentrée de déverrouillage.

Selon encore une autre variante, un vérin conforme à l'invention peut encore être caractérisé en ce que lesdits moyens de verrouillage comprennent un ou des verrous mobiles radialement dans des logements appropriés de ladite tige de précourse, et propres à se bloquer dans des logements d'une culasse avant du corps dudit vérin.

Ces verrous peuvent être bloqués dans lesdits logements par une rampe de positionnement de ladite tige de travail.

A titre de variante, le ou lesdits verrous peuvent être bloqués dans lesdits logements par une tige de positionnement à rampe montée coulissante sur ladite tige de travail, à l'intérieur de ladite tige de précourse.

Selon un mode de réalisation plus particulier, le vérin peut encore être caractérisé en ce que ladite tige de positionnement est manoeuvrée par ladite tige de travail entre une position de libération du ou desdits verrous et ladite position de blocage desdits verrous dans lesdits logements, cette tige de travail comportant à cet effet, d'une part un épaulement propre à presser axialement, par l'intermédiaire d'un élément élastique, ladite tige de positionnement vers sa position de blocage du ou des verrous et, d'autre part, une butée extérieure propre, lors du retrait de ladite tige de travail, à ramener ladite tige de positionnement dans ladite position de libération du ou desdits verrous.

Quel que soit le mode de réalisation, on peut encore prévoir que ledit piston de travail est solidarisé d'un ou plusieurs pistons d'amplification mobiles chacun dans une chambre d'amplification propre à être alimentée en ledit fluide sous pression.

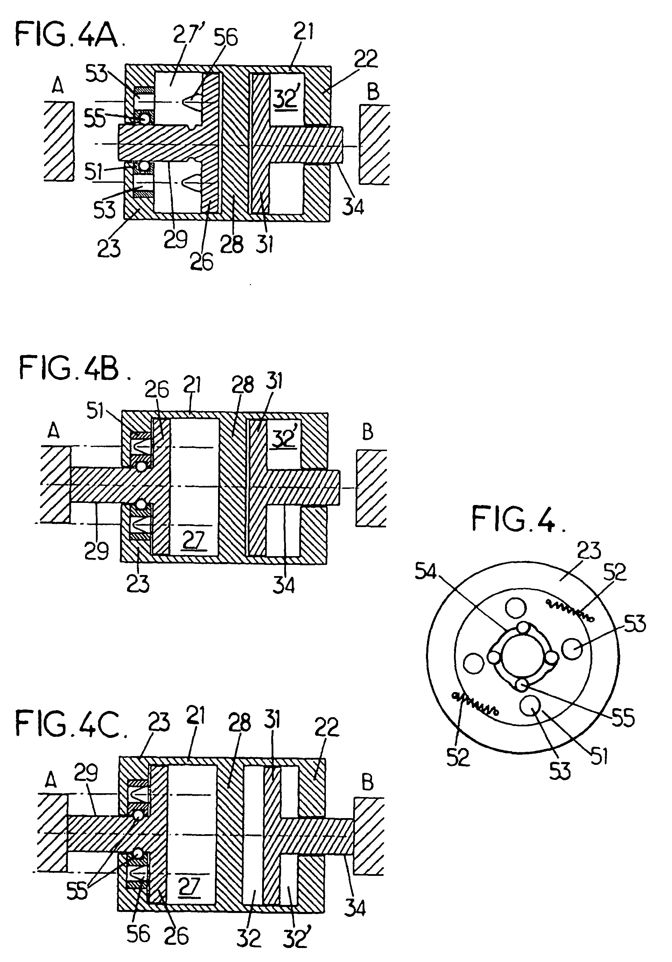

Des modes d'exécution de l'invention vont maintenant être décrits à titre d'exemples nullement limitatifs avec référence aux autres figures du dessin ci-annexé, numérotées 3A à 3C, 4A à 4C, 5A à 5C, 6A à 6C et 7A à 7C, qui sont des vues pour la plupart schématiques, en coupe axiale, de différents vérins conformes à l'invention. Dans la numérotation de ces figures, et comme dans celle des figures 1A à 1C et 2A à 2C, la lettre A représente un vérin en position totalement rétractée, c'est-à-dire dans le cas où il commande un outil du genre pince ou analogue, une position correspondant à la pleine ouverture de la pince, la lettre B représente le vérin après déplacement du piston de précourse en position de fin d'approche, c'est-à-dire, dans le cas où il commande un outil du genre pince ou analogue, une position correspondant à une petite ouverture de la pince, et la lettre C représente le vérin après déplacement du piston de travail jusqu'à sa position de travail, c'est-à-dire, dans le cas où il commande un outil du genre pince ou analogue, une position correspondant par exemple au .serrage de la pièce. Quant à la figure 4, elle montre, en vue de face, les moyens de verrouillage utilisés dans le mode de réalisation des figures 4A à 4C.

Dans la mesure du possible, on a aussi utilisé les mêmes références que ci-dessus pour désigner les mêmes organes ou des organes analogues ou jouant le même rôle.

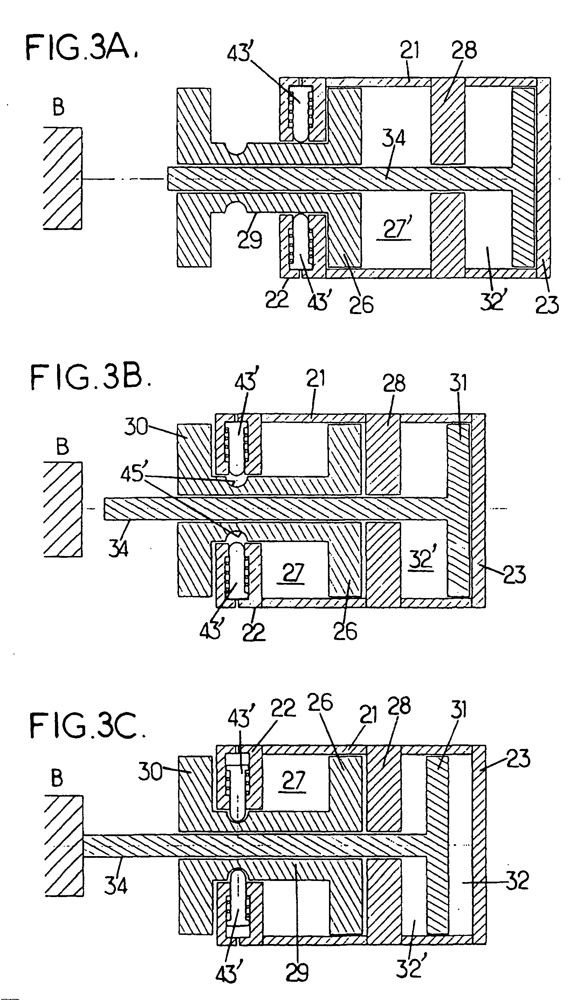

Dans le mode de réalisation des figures 3A à 3C, on a référencé en 30 un élargissement de l'extrémité extérieure de la tige creuse 29 de précourse, grâce auquel cette tige peut être fixée au corps 5 de l'outil (pince de soudage) ou au bâti de la machine à souder (cf figure 1). Cet élargissement ainsi que le piston de précourse d'approche 26 sont donc à considérer ici comme des parties fixes par rapport à l'appui B. On voit que dans la culasse avant 22 sont ménagés des logements radiaux pour deux verrous 43' établis sous la forme de petits pistons rappelés vers l'extérieur par des ressorts.

A partir de la position de pleine ouverture de la figure 3A (en supposant que le vérin commande par exemple la fermeture d'une pince ou analogue), on réalise l'approche de la tige de travail 34 en envoyant du fluide sous pression dans la chambre de pression de précourse 27, ce qui amène le corps 21 du vérin (et en même temps le piston de travail 31) dans la position de la figure 3B (position de petite ouverture atteinte en fin de précourse) pour laquelle les verrous 43' précités se trouvent vis-à-vis d'alvéoles 45' de la tige de précourse 29. En envoyant du fluide sous pression sur la tête des verrous 43', on les amène en position de blocage dans le fond des alvéoles 45'. Le corps 21 du vérin est alors bloqué par rapport au piston de précourse 26. En envoyant un fluide sous pression dans la chambre de pression de travail 32, on poussera la tige de travail 34 en position de serrage sur l'appui B (position de fermeture de la figure 3C) sans provoquer le recul du corps 21 de vérin, même pour une forte pression dans la chambre 32.

Dans le mode de fonctionnement du vérin des figures 3A à 3C, on a supposé que la tige de travail 34 effectuait à la fois le déplacement de précourse et consécutivement le déplacement de travail, l'outil étant considéré par exemple comme comportant deux branches articulées, l'une fixe, l'autre reliée à la tige de travail 34.

Avec le vérin représenté aux figures 4A à 4C, au contraire, on a supposé que la pince avait deux branches mobiles : l'une, reliée à la tige de précourse 29, effectuant le déplacement d'approche (jusqu'à mise en butée sur l'appui A) et l'autre, reliée à 1a tige de travail 34, effectuant la course complémentaire de serrage, symbolisée par mise en butée de cette tige sur l'appui B. Dans ce cas, le corps 21 du vérin comporte encore des moyens de verrouillage, sur lui, de la tige de précourse 29. Pour ce faire, on a prévu, dans la culasse arrière 23 du corps de vérin, une couronne rotative 51, coaxiale à la tige de précourse 29 et propre à être rappelée en position de déverrouillage par des ressorts à action périphérique 52 (figure 4) connectés entre cette couronne et la culasse. Cette couronne est traversée axialement par quatre alésages 53 et comporte centralement une came 54 à billes de verrouillage 55. Cette came comporte quatre alvéoles dans lesquels les billes 55 peuvent se loger en position de déverrouillage, en étant simplement en appui sur la surface lisse de la tige de précourse 29.

Vis-à-vis de la culasse 23, le piston de précourse 26 comporte quant à lui quatre pointes coniques 56 qui, au repos, sont légèrement désaxées par rapport aux alésages 53.

A partir de la position de pleine ouverture de la pince représentée à la figure 4A, l'injection de fluide sous pression dans la chambre 27 (avec mise à l'échappement de la chambre 27') provoque le déplacement du piston de précourse 26 vers la gauche, jusqu'à butée de sa tige 29 sur l'appui A, ce qui amène la pince ou analogue en position de petite ouverture (le corps 21 du vérin est ici fixe). En pénétrant dans les alésages 53 de la couronne 51, les pointes coniques 56 la font tourner (le piston 26 étant empêché de pivoter), ce qui, par rotation de la came 54, force les billes 55 à se bloquer dans des alvéoles correspondants de la tige de précourse 29. Le corps 21 du vérin est donc bloqué par rapport à cette tige et à l'appui A. Par suite, l'injection de fluide, même sous haute pression, dans la chambre de pression de travail 32 (avec chambre 32' à l'échappement) ne risque pas de faire reculer le corps 21 du vérin : ce fluide ne peut que repousser la tige de travail vers la droite, jusqu'à obtention de la position de fermeture de la pince, symbolisée par la butée de la tige 34 sur l'appui B (figure 4C).

Il va de soi - et ceci est vrai pour tous les modes de réalisation - que le retour de la position C à la position B ou de la position B à la position A se fait naturellement en mettant sous pression les chambres 27' et 32', et à l'échappement les chambres 27 et 32.

Dans le mode de réalisation des figures 5A à 5C, et d'une façon analogue à ce qui a été décrit avec référence à l'art antérieur des figures 2A à 2C, le piston de précourse 26, monté coulissant dans le corps 21 du vérin, est établi sous la forme d'un cylindre recevant un piston de travail 31 et sa tige de travail 34, ainsi qu'un piston d'amplification 31a et sa tige d'actionnement de l'outil 34a. Ce piston de précourse 26 est actionné par un piston de précourse auxiliaire 26a monté dans un cylindre 21a constituant un prolongement du corps de vérin 21, et dont la tige de précourse auxiliaire 29a est reliée à une culasse arrière 28 du piston de précourse 26. Dans cette culasse 28 sont montés pivotants deux loquets 57 rappelés par des ressorts dans un sens tendant à les amener en saillie sur la surface latérale du piston de précourse 26 et à permettre leur engagement et le blocage de leurs extrémités dans des encoches 58 du corps de vérin 21 (figure 5A). Le piston de travail 31 comporte quant à lui, du côté de la chambre de pression de travail 32 (figure 5C), deux ergots à rampes 59 propre à agir sur les queues des loquets 57, de sorte à les ramener en position rentrée de déverrouillage, lorsque le piston 31 se rapproche de la culasse 28.

Ceci étant, le fonctionnement de ce dispositif est le suivant : à partir de la position de pleine ouverture de la figure 5A, l'admission de la pression dans la chambre de pression de précourse auxiliaire 27a provoque le déplacement vers la gauche du piston de précourse auxiliaire 26a ainsi que du piston de précourse 26. Ce déplacement entraîne bien entendu un déplacement égal, vers la gauche, du piston de travail 31 ainsi que de la tige d'actionnement de l'outil 34a. L'ensemble occupe alors la position de petite ouverture, ou de fin de précourse, représentée à la figue 5B.

Dès que la pression est admise dans la chambre de pression de travail 32, le début du déplacement du piston de travail 31 vers la gauche libère les loquets 57, dont les extrémités peuvent alors venir se bloquer dans les encoches 58 du corps de vérin 21 : le piston de précourse 26 est alors empêché de se déplacer vers la droite, par rapport au corps 21, même sous l'effet d'une forte pression dans la chambre 32. Cette pression, éventuellement amplifiée par l'étage d'amplification, provoque donc la poussée du piston 31a et de la tige d'actionnement 34a jusqu'à la position de serrage et de fermeture de l'outil (figure 5C).

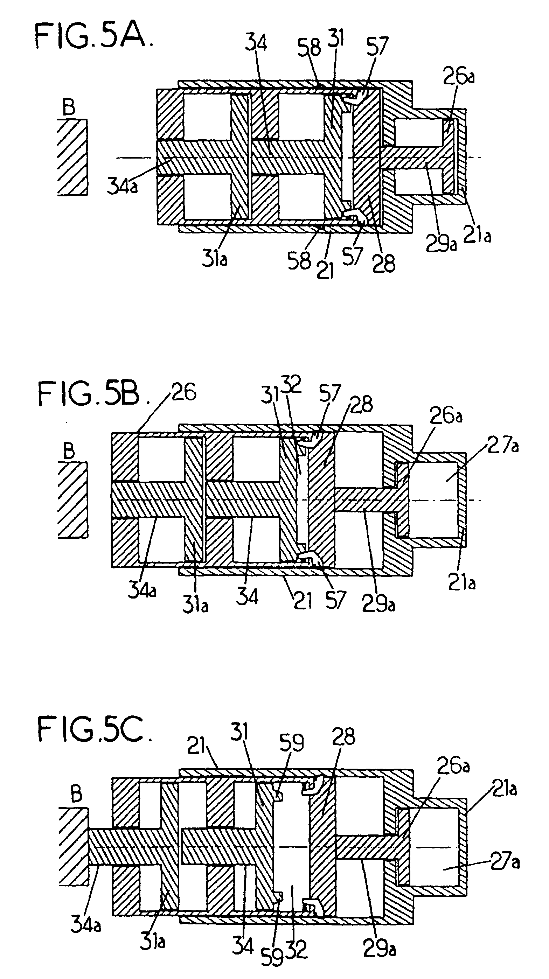

A son retour dans la position de la figure 5B, le piston de travail 31 libérera les loquets 57, ce qui déverrouillera le piston de précourse 26 et permettra ensuite son retour - et celui de la tige 34a - dans la position de grande ouverture de la figure 5A.

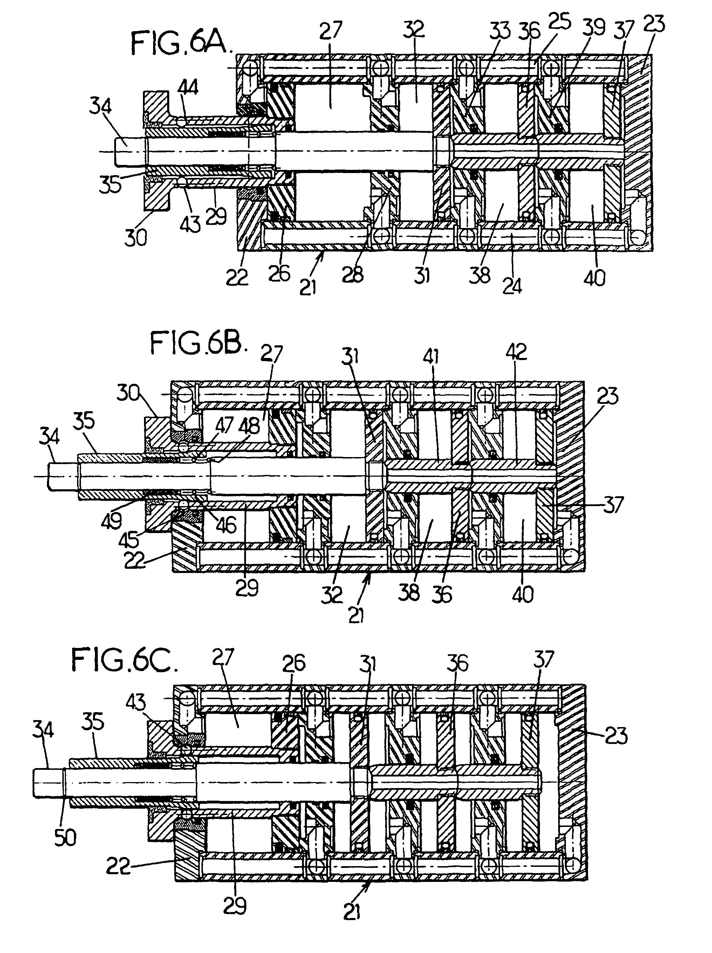

Un mode d'exécution détaillé de l'invention va maintenant être décrit, encore à titre d'exemple nullement limitatif, avec référence aux figures 6A à 6C, qui représentent en coupe axiale un vérin pneumatique multiétages à double course conforme à l'invention en différentes positions de son fonctionnement.

Le corps cylindrique 21 du vérin pneumatique est fermé à ses extrémités par une culasse avant 22 et une culasse arrière 23. Latéralement il comporte des tubulures 24 et 25 qui, associées à des soupapes, permettent l'admission d'air comprimé dans les différentes chambres du vérin, ou son échappement, selon les différentes phases du fonctionnement et ceci d'une façon qu'il n'y a pas lieu de détailler.

Dans ce corps 21 de vérin peuvent se déplacer :
- un piston de précourse 26 dans une chambre de pression de précourse 27 qui s'étend entre la culasse avant 22 et une culasse intermédiaire 28, ce piston de précourse étant solidaire d'une tige de précourse creuse 29 portant à son extrémité extérieure un élargissement 30 par lequel elle peut être fixée au corps 5 de l'outil (pince de soudage) ou au bâti de la machine à souder ;
- un piston de travail 31 dans une chambre de pression de travail 32 qui s'étend entre la culasse intermédiaire 28 et une autre culasse intermédiaire 33, ce piston de travail étant solidaire d'une tige de travail 34 montée coulissante dans la tige de précourse 29 par l'intermédiaire d'une tige de positionnement à rampe 35. L'extrémité extérieure de la tige de travail 34, en saillie sur la tige de positionnement 35, actionnera une partie mobile de l'outil de sorte à ce qu'il puisse exercer, par exemple sur la tôle à souder, la force de serrage nécessaire à l'opération de soudage de la pince ;
- deux pistons amplificateurs 36 et 37 montés dans des chambres d'amplification, respectivement 38, qui s'étend entre la culasse intermédiaire 33 et encore une autre culasse intermédiaire 39, et 40, qui s'étend entre la culasse intermédiaire 39 et la culasse arrière 23. Ces deux pistons 36 et 37 (qui pourraient être en plus grand nombre) sont solidaires respectivement de tiges 41 et 42 grâce auxquelles ils peuvent exercer une poussée complémentaire sur la tige de travail 34.

Le corps 21 du vérin pneumatique peut se déplacer axialement par rapport à la tige de précourse fixe 29, et y être verrouillé. A cette fin, le vérin comporte un ensemble de billes de verrouillage 43 montées dans des logements 44 de la tige de précourse 29 et propres à se bloquer dans des alvéoles 45 de la culasse 22 grâce à l'action de la tige de positionnement à rampe 35 mentionnée plus haut, laquelle comporte en bout de rampe un renflement 46 et est montée axialement coulissante entre la tige de travail 34 et la tige de précourse 29.

La tige de positionnement 35 peut être manoeuvrée axialement dans les deux sens, d'une part par l'intermédiaire d'un ressort 47 comprimé entre un épaulement 48 de la tige de travail 34 et une bague 49 logée entre les tiges 34 et 35, d'autre part par une butée 50 prévue près de l'extrémité extérieure de la tige de travail 34 et propre à prendre appui sur l'extrémité libre de la tige de positionnement à rampe 35.

Ceci étant, le fonctionnement du vérin pneumatique qui vient d'être décrit est le suivant :
dans la position de la figure 6A, on a établi la pression dans les chambres 27, 32, 38 et 40, sur la face arrière du piston de précourse 26 et sur la face avant du piston de travail 31 et des pistons amplificateurs 36 et 37. La pression dans la chambre 27 provoque le recul (par rapport à l'outil et à la tige de précourse fixe 29) de la culasse intermédiaire 28 et donc du corps 21 du vérin, tandis que la pression dans les chambres 32, 38 et 40 (ou dans une seule d'entre elles) maintient la tige de travail 34 dans sa position la plus reculée par rapport à l'outil, correspondant à la pleine ouverture de la pince de soudage.

A partir de cette position, la position de petite ouverture de la pince peut être atteinte en maintenant la pression sur la face avant des pistons 31, 36 et 37 et en amenant la pression également sur la face avant du piston de précourse 26, l'autre partie de la chambre 27, auparavant sous pression, étant alors mise à l'échappement (à droite du piston 26 sur la figure 6B). Le piston 26 étant fixe par rapport à l'outil, de même que la tige de précourse 29, la pression s'exerçant sur la culasse avant 22 provoque le déplacement du corps 21 du vérin vers l'outil, de même que celui de la tige de travail 34, qui vient occuper alors la position de petite ouverture de la pince de soudage.

A partir de cette position de petite ouverture de la figure 6B on peut regagner la position de grande ouverture de la figure 6A en rétablissant la pression sur la face arrière du piston de précourse 26, ou l'on peut commander la position de fermeture de la pince pour effectuer l'opération de pressage des tôles 12 et 13, et l'opération de soudage.

Pour ce faire, il suffit de maintenir la pression sur la face avant du piston de précourse 26 pour maintenir le corps 21 du vérin dans la position des figures 6B et 6C, et d'amener la pression dans les chambres 32, 38 et 40, sur la face arrière du piston de travail 31 et des pistons amplificateurs 36 et 37 (le compartiment opposé de ces' chambres, du côté de la face avant de ces pistons, étant bien entendu mis à l'échappement).

De ce fait, la tige de travail 34 se déplace par rapport au corps 21 du vérin vers la gauche de la figure 6C, ce qui provoque le verrouillage de la tige de précourse 29 sur le corps 21 du vérin : en effet, le renflement 46 de la tige de positionnement 35, poussée par le ressort 47 en appui sur l'épaulement 48 de la tige de travail, sollicite les billes 43 vers l'extérieur et les bloque au fond des alvéoles 45 de la culasse avant 22. La pression régnant dans la chambre de travail 32 et dans les chambres amplificatrices 38 et 40 (sur la face arrière des pistons correspondants) ne peut donc provoquer le recul vers la droite du corps 21 du vérin. Ce corps est bloqué dans la position de la figure 6C, et cette pression ne peut par suite que provoquer le déplacement de la tige de travail 34 jusqu'à la position de travail de la figure 6C, correspondant à la fermeture de la pince de soudage.

Lorsque l'effet de soudage est exercé, les billes 43 exercent une forte pression sur la tige de positionnement 35, qui par conséquent peut se bloquer. Ceci n'empêche pas la poursuite du déplacement axial de la tige de travail 34 dans le sens de l'extraction, puisque cette tige peut encore coulisser dans la tige de positionnement 35 en comprimant le ressort 47. Le déplacement des électrodes 2' et 3' (ou autre outil) dans le sens du serrage n'est donc pas empêché tandis qu'elles exercent leur effort.

A partir de la position de travail de la figure 6C, on peut regagner la position de petite ouverture de la figure 6B en inversant la pression dans les chambres de travail 32 et amplificatrices 38 et 40 pour provoquer la rétraction de la tige 34 dans le corps 21. Lors de cette rentrée, la butée 50 de la tige 34, en appuyant sur l'extrémité de la tige de positionnement 35, permet d'obtenir le déverrouillage entre le corps 21 du vérin et la tige de précourse 29, ensuite de quoi on peut regagner la position de pleine ouverture de la figure 6A de la façon déjà indiquée plus haut.

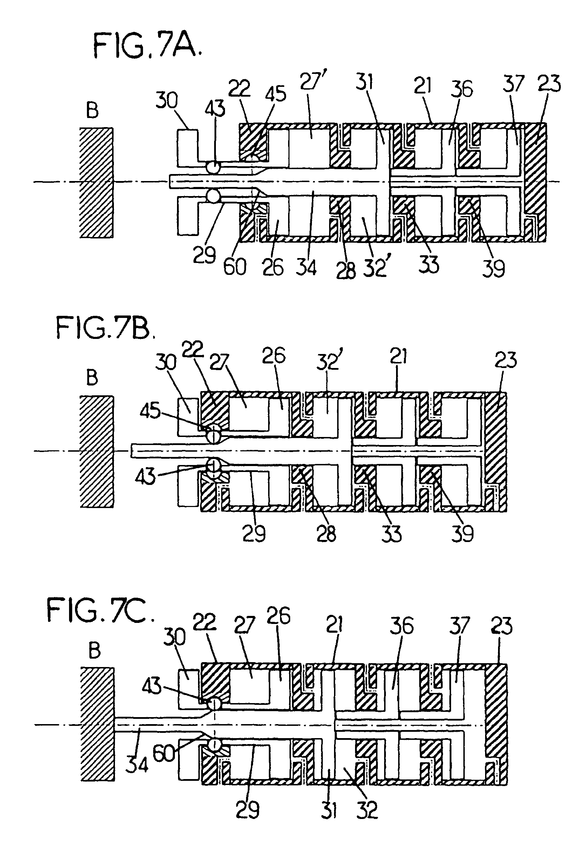

Le mode de réalisation des figures 7A à 7C est du même genre que celui des figures 6A à 6C, mais simplifié : il n'y a pas de tige de positionnement 35, et la rampe 60 agissant sur les billes de verrouillage 43 est prévue directement sur la tige de travail 34.

A partir de la position de grande ouverture de la figure 7A, le déplacement du corps de vérin 21 vers la gauche amène les alvéoles 45 de la culasse avant 22 vis-à-vis des billes 43 de la tige de précourse 29. Le déplacement équivalent de la tige de travail 34 (le piston de travail 31 étant en butée sur sa culasse 33) l'amène dans la position de petite ouverture de la figure 7B. La mise en pression de la chambre de pression de travail 32 provoque alors le déplacement de la tige de travail 34 vers la gauche, jusqu'à la position de fermeture illustrée par la figure 7C. I1 est à noter que dès le début de ce déplacement, les rampes 60 (ou partie conique) de la tige 34 forcent les billes 43 dans les alvéoles 45 de la culasse 22, ce qui là encore effectue le blocage du piston de précourse 26 par rapport au corps 21 du vérin. Le piston de précourse 26 étant fixe, le corps 21 du vérin ne peut donc "reculer" vers la droite, même pour une pression de serrage élevée.

En d'autres termes, il sera toujours possible, grâce à l'invention, de mettre en oeuvre un effort de précourse réduit tout en conservant un effort de serrage élevé, ce qui permet de réaliser une économie en fluide sous pression et de gagner en temps de réponse. D'autre part, on pourra toujours multiplier le nombre d'étages d'amplification sans augmenter démesurément la longueur ou le volume du vérin.

## Revendications

1. Vérin, à précourse d'approche et course de travail, pour la manoeuvre d'un outil, comportant un corps de vérin dans lequel peuvent coulisser au moins deux pistons, soit dans le même sens, soit dans deux sens opposés lorsqu'ils sont extraits du corps du vérin, à savoir un piston de précourse (26), et au moins un piston de travail (31) actionnant l'outil, ainsi que des moyens de verrouillage, au moins dans le sens du retrait, entre ledit piston de précourse (26) et ledit corps (21) de vérin, ces moyens de verrouillage agissant entre ledit corps de vérin (21) et une tige de précourse (29) solidaire dudit piston (26) de précourse, **caractérisé en ce que** ladite tige de travail (34) et ladite tige de précourse (29) se déplacent dans le même sens entre leur position rentrée dans ledit corps de vérin (21) et leur position extraite, et la tige de travail (34) est montée coulissante dans un logement axial de la tige de précourse (29).

2. Vérin selon la revendication 1, **caractérisé en ce que** les moyens de verrouillage comportent au moins un verrou (43') propre à coulisser transversalement dans une culasse avant(22)dudit corps (21) de vérin, ce verrou étant établi sous la forme d'un petit piston et pouvant être sollicité, par une pression extérieure, à se verrouiller dans un logement (45') de ladite tige de précourse (29), en comprimant un ressort de rappel en position de déverrouillage.

3. Vérin selon la revendication 1, **caractérisé en ce que** lesdits moyens de verrouillage comprennent, dans une culasse arrière (23) du corps (21) dudit vérin, une couronne (51) coaxiale à ladite tige de précourse (29) et propre à être rappelée en position de déverrouillage par des ressorts (52) à action périphérique, la rotation de cette couronne (51) à l'encontre de cette force de rappel pouvant être provoquée par apport d'énergie extérieure ou automatiquement par l'arrivée dudit piston de précourse (26) à la fin de sa course d'approche et sollicitant alors un ou des verrous (55) à être bloqués dans des logements de ladite tige de précourse (29).

4. Vérin selon la revendication 3, **caractérisé en ce que** sur sa face tournée vers ladite culasse arrière (23), ledit piston de précourse (26) comporte des pointes coniques (56) propres à s'engager dans des alésages respectifs (53) de ladite couronne (51) et à faire pivoter cette dernière jusqu'à sa position de verrouillage, ces pointes (56) étant légèrement décalées par rapport auxdits alésages (53) lorsque ladite couronne (51) est au repos, en position de déverrouillage.

5. Vérin selon l'une quelconque des revendications précédentes, **caractérisé en ce qu'**il comporte un ou des loquets (57) rappelés par des ressorts dans un sens tendant à les amener en saillie sur la surface latérale dudit piston de précourse (26) et à permettre leur engagement dans des encoches (58) du corps de vérin, assurant ainsi le blocage dudit piston de précourse (26) par rapport à ce corps, au moins dans le sens de son retrait, ledit piston de travail (31) comportant des rampes (59) propres à agir, lors de son retour en position complètement rétractée, sur les queues desdits loquets (57), de sorte à les ramener en position rentrée de déverrouillage.

6. Vérin selon la revendication 1, **caractérisé en ce que** lesdits moyens de verrouillage comprennent un ou des verrous (43) mobiles radialement dans des logements appropriés (44) de ladite tige de précourse (29), et propres à se bloquer dans des logements (45) d'une culasse avant (22) du corps (21) dudit vérin.

7. Vérin selon la revendication 6, **caractérisé en ce que** le ou lesdits verrous (43) peuvent être bloqués dans lesdits logements (45) par une rampe de positionnement (60) de ladite tige de travail (34).

8. Vérin selon la revendication 6, **caractérisé en ce que** le ou lesdits verrous (43) peuvent être bloqués dans lesdits logements (45) par une tige de positionnement (35) à rampe montée coulissante sur ladite tige de travail (34), à l'intérieur de ladite tige de précourse (29).

9. Vérin selon la revendication 8, **caractérisé en ce que** ladite tige de positionnement (35) est manoeuvrée par ladite tige de travail (34) entre une position de libération desdits verrous (43) et ladite position de blocage desdits verrous (43) dans lesdits logements (45), cette tige de travail (34) comportant à cet effet, d'une part un épaulement (48) propre à presser axialement, par l'intermédiaire d'un élément élastique (47), ladite tige de positionnement (35) vers sa position de blocage du ou des verrous (43) et, d'autre part, une butée extérieure (50) propre, lors du retrait de ladite tige de travail (34), à ramener ladite tige dé positionnement (35) dans ladite position de libération du ou desdits verrous (43).

10. Vérin selon l'une quelconque des revendications précédentes, **caractérisé en ce que** ledit piston de travail (31) est solidarisé d'un ou plusieurs pistons d'amplification (36, 37) mobiles chacun dans une chambre d'amplification (38, 40) propre à être alimentée en ledit fluide sous pression.

## Patentansprüche

1. Stellzylinder mit Annäherungsvorhub und Arbeitshub für die Betätigung eines Werkzeugs, mit einem Stellzylinderkörper, in dem wenigstens zwei Kolben, d. h. ein Vorhubkolben (26) und wenigstens ein das Werkzeug betätigender Arbeitskolben (31), entweder in der gleichen Richtung gleiten können oder in zwei entgegengesetzten Richtungen gleiten können, wenn sie aus dem Körper des Stellzylinders herausgezogen sind, sowie mit Mitteln für eine Verriegelung wenigstens in Rückstellrichtung zwischen dem Vorhubkolben (26) und dem Körper (21) des Stellzylinders, wobei diese Verriegelungsmittel zwischen dem Körper des Stellzylinders (21) und einer Vorhubstange (29), die mit dem Vorhubkolben (26) fest verbunden ist, wirken, **dadurch gekennzeichnet, dass** sich die Arbeitsstange (34) und die Vorhubstange (29) zwischen ihrer in den Körper des Stellzylinders (21) eingefahrenen Position und ihrer herausgezogenen Position in derselben Richtung verlagern, und die Arbeitsstange' (34) in einem axialen Aufnahmesitz der Vorhubstange (29) gleitend angebracht ist.

2. Stellzylinder nach Anspruch 1, **dadurch gekennzeichnet, dass** die Verriegelungsmittel wenigstens einen Riegel (43') umfassen, der in einem vorderen Schloss (22) des Körpers (21) des Stellzylinders transversal gleiten kann, wobei dieser Riegel in Form eines kleinen Kolbens verwirklicht ist und durch einen äußeren Druck vorbelastet sein kann, um in einem Aufnahmesitz (45') der Vorhubstange (29) zu verriegeln, indem eine Rückstellfeder in der Entriegelungsstellung komprimiert ist.

3. Stellzylinder nach Anspruch 1, **dadurch gekennzeichnet, dass** die Verriegelungsmittel in einem hinteren Schloss (23) des Körpers (21) des Stellzylinders einen zu der Vorhubstange (29) koaxialen Kranz (51) aufweisen, der durch Federn (52) mit Umfangswirkung in die Entriegelungsposition zurückgestellt werden kann, wobei die Drehung dieses Kranzes (51) entgegen dieser Rückstellkraft durch Energieeintrag von außen oder automatisch durch die Ankunft des Vorhubkolbens (26) am Ende seines Annäherungshubs, wo er dann einen oder die Riegel (55) in den Aufnahmesitzen der Vorhubstange (29) blockiert hält, hervorgerufen werden kann.

4. Stellzylinder nach Anspruch 3, **dadurch gekennzeichnet, dass** der Vorhubkolben (26) an seiner zu dem hinteren Schloss (23) gewandten Fläche konische Spitzen (56) aufweist, die in entsprechenden Bohrungen (53) des Kranzes (51) in Eingriff gelangen können' und diesen letzteren bis in seine Verriegelungsposition schwenken können, wobei diese Spitzen (56) in Bezug auf die Bohrungen (53) leicht versetzt sind, wenn der Kranz (51) in der Entriegelungsposition in Ruhe ist.

5. Stellzylinder nach einem der vorhergehenden Ansprüche, **dadurch gekennzeichnet, dass** er einen oder mehrere Klinken (57) umfasst, die durch Federn in einer Richtung zurückgestellt werden, in der sie von der seitlichen Oberfläche des Vorhubkolbens (26) vorstehen und ihr Eingriff in Nuten (58) des Körpers des Stellzylinders möglich ist, wodurch die Blokkierung des Vorhubkolbens (26) in Bezug auf diesen Körper wenigstens in der Rückzugsrichtung sichergestellt ist, wobei der Arbeitskolben (31) Rampen (59) umfasst, die bei seiner Rückkehr in die vollständig eingefahrene Position auf die hinteren Enden der Klinken (57) in der Weise einwirken können, dass sie in die eingefahrene Entriegelungsposition zurückgeführt werden.

6. Stellzylinder nach Anspruch 1, **dadurch gekennzeichnet, dass** die Verriegelungsmittel einen oder mehrere Riegel (43) umfassen, die in geeigneten Aufnahmesitzen (44) der Vorhubstange (29) radial beweglich sind und in den Aufnahmesitzen (45) eines vorderen Schlosses (22) des Körpers (21) des Stellzylinders blockiert werden können.

7. Stellzylinder nach Anspruch 6, **dadurch gekennzeichnet, dass** der oder die Riegel (43) in den Aufnahmesitzen (45) durch eine Positionierungsrampe (60) der Arbeitsstange (34) blockiert werden können.

8. Stellzylinder nach Anspruch 6, **dadurch gekennzeichnet, dass** der oder die Riegel (43) in den Aufnahmesitzen (45) durch eine Positionierungsstange (35) mit Rampe, die an der Arbeitsstange (34) innerhalb der Vorhubstange (29) gleitend angebracht ist, blockiert werden können.

9. Stellzylinder nach Anspruch 8, **dadurch gekennzeichnet, dass** die Positionierungsstange (35) durch die Arbeitsstange (34) zwischen einer Position zur Freigabe der Riegel (43) und der Position der Blockierung der Riegel (43) in den Aufnahmesitzen (45) betätigt werden kann, wozu diese Arbeitsstange (34) einerseits eine Schulter (48) aufweist, die die Positionierungsstange (35) über ein elastisches Element (47) axial in ihre Blockierungsposition für den oder die Riegel (43) pressen kann, und andererseits einen äußeren Anschlag (50) aufweist, der beim Zurückziehen der Arbeitsstange (34) die Positionierungsstange (35) in die Position für die Freigabe des oder der Riegel (43) zurückführen kann.

10. Stellzylinder nach einem der vorhergehenden Ansprüche, **dadurch gekennzeichnet, dass** der Arbeitskolben (31) mit einem oder mehreren Verstärkungskolben (36, 37) fest verbunden ist, die jeweils in einer Verstärkungskammer (38, 40) beweglich sind, die mit einem mit Druck beaufschlagten Fluid versorgt werden kann.

## Claims

1. Actuator effecting an approach pre-stroke and a working stroke for maneuvering a tool, comprising an actuator body in which at least two pistons are slidable, either in the same direction or in opposite directions, when extracted from the actuator body, namely a pre-stroke piston (26) and at least one working piston (31) actuating the tool, and locking means, at least in the retraction direction, between said pre-stroke piston (26) and said actuator body (21), said locking means acting between said actuator body (21) and pre-stroke rod (29) joined to said pre-stroke piston (26), **characterized in that** said working rod (34) and said pre-stroke rod (29) are displaced in the same direction between their retracted position inside said actuator body (21) and their extracted position, the working rod (34) being slidably mounted in an axial compartment of the pre-stroke rod (29).

2. Actuator according to claim 1, **characterized in that** the locking means comprise at least one lock (43') designed to slide transversely in a front cylinder head (22) of said actuator body (21), this lock being provided in the form of a small piston and being biased, by an external pressure, so as to lock in a pocket (45') of said pre-stroke rod (29), by compressing a return spring in the unlocking position.

3. Actuator according to claim 1, **characterized in that** said locking means comprise, in a rear cylinder head (23) of the body (21) of said actuator, a crown (51) coaxial with said pre-stroke rod (29) and designed to be returned to an unlocking position by peripherally acting springs (52), the rotating motion of this crown (51) against the return force being generated by applying external energy or automatically when said pre-stroke piston (26) reaches the end of its approach pre-stroke, thereby biasing a lock or locks (55) to be engaged in compartments of said pre-stroke rod (29).

4. Actuator according to claim 3, **characterized in that** on its face directed towards said rear cylinder head (23), said pre-stroke piston (26) has conical tips (56) designed to locate in respective bores (53) of said crown (51) and to pivot the latter into its locking position, these tips (56) being slightly offset from said bores (53) when said crown (51) is not operating, in the unlocking position.

5. Actuator according to any one of the preceding claims, **characterized in that** it has a catch or catches (57) biased by springs in a direction which causes them to project from the lateral surface of said pre-stroke piston (26) enabling them to engage in notches (58) of the actuator body, thereby locking said pre-stroke piston (26) relative to this body, at least in the retraction direction thereof, said working piston (31) having ramps (59) designed to act on the tails of said catches (57), when returning it to its fully retracted position, thereby returning them to the unlocking position.

6. Actuator according to claim 1, **characterized in that** said locking means comprise a lock or locks (43) radially displaceable in appropriate recesses (44) of said pre-stroke rod (29) and designed to locate in pockets (45) of a front cylinder head (22) of the body (21) of said actuator.

7. Actuator according to claim 6, **characterized in that** the lock or locks (43) may be engaged in said pockets (45) by a positioning ramp (60) of said working rod (34).

8. Actuator according to claim 6, **characterized in that** said lock or locks (43) may be engaged in said pockets (45) by a ramped positioning rod (35) slidably mounted on said working rod (34) inside said pre-stroke rod (29).

9. Actuator according to claim 8, **characterized in that** said positioning rod (35) is maneuvered by said working rod (34) between a position in which said locks (43) are released and said position in which said locks (43) are engaged in said pockets (45), this working rod (34) having, for this purpose, firstly a shoulder (48) designed to push axially, by means of an elastic element (47), said positioning rod (35) towards the position in which it engages the lock or locks (43) and, secondly, an outer stop (50) designed to return said positioning rod (35) into said position in which said lock or locks (43) are released as said working rod (34) is retracted.

10. Actuator according to any one of the preceding claims, **characterized in that** said working piston (31) is joined to one or more amplifier pistons (36, 37) each being displaceable in an amplifier chamber (38, 40) to which said pressurized fluid is applied.
